# EUROPÄISCHE PATENTSCHRIFT

(11) **EP 0 660 977 B1**
(45) Veröffentlichungstag und Bekanntmachung des Hinweises auf die Patenterteilung: **13.05.1998**
(21) Anmeldenummer: 93918871.0
(22) Anmeldetag: 14.09.1993
(51) Int. Cl.: H02M 7/217, H02M 3/335

(54) **RÜCKSPEISUNGSFESTER SYNCHRON-GLEICHRICHTER**
SYNCHRONOUS RECTIFIER RESISTANT TO FEEDBACK
REDRESSEUR SYNCHRONE RESISTANT A LA RETROACTION

(30) Priorität: 14.07.1993 CH 2116/93
(43) Veröffentlichungstag der Anmeldung: 05.07.1995
(73) Patentinhaber: MELCHER AG, 8610 Uster (CH)
(72) Erfinder: MILAVEC, Johann, CH-5200 Windisch (CH); ALLINGTON, Philip, CH-8610 Uster (CH)
(74) Vertreter: Salgo, Reinhold Caspar, Dr.
(86) Internationale Anmeldenummer: CH9300225
(87) Internationale Veröffentlichungsnummer: WO9502918

(56) Entgegenhaltungen:
- EP-A- 0 396 125
- 13TH INTERNATIONAL TELECOMMUNICATIONS ENERGY CONFERENCE INTELEC 91 5. November 1991 , KYOTO Seiten 495 - 501 BLANC 'Practical application of MOSFET synchronous rectifiers'

## Beschreibung

Die vorliegende Erfindung betrifft einen rückspeisungsfesten Synchron-Gleichrichter nach dem Oberbegriff des Patentanspruches 1.

Speisegeräte mit Synchron-Gleichrichtern sind an sich bekannt und als Stromversorgungsgeräte im Einsatz. Ebenso sind solche Geräte aus Veröffentlichungen bekannt, so z.B. aus O. Kilgenstein, Schaltnetzteile in der Praxis, Würzburg 1992, oder aus dem Artikel 'Practical application of MOSFET synchronous rectifiers' (BLANC, 13TH INTERNATIONAL TELECOMMUNICATIONS ENERGY CONFERENCE INTELEC 91 (5 November 1991,KYOTO), Seiten 495 - 501). Jedes der bekannten Geräte hat einen Arbeitsbereich, der nach oben durch den maximalen Ausgangsstrom begrenzt ist, bei welchem die Ausgangsspannung noch auf den Sollwert geregelt wird.

Ist der Strombedarf zeitweise oder dauernd grösser, als die Leistungsfähigkeit eines einzelnen Gerätes und die Wahl eines solchen grösserer Leistung aus bestimmten Gründen nicht angezeigt, so werden solche Geräte parallel geschaltet.

Entsteht in einem der so parallel geschalteten Geräte ein Betriebszustand, bei dem entweder die Ausgangsspannung absinkt, oder der Oszillator den Haupttransformator nicht mehr ansteuert bzw. unterbricht, so speisen die mit dem betrachteten Gerät parallelgeschalteten Geräte in das vorübergehend oder dauernd ausser Betrieb geratene Gerät zurück, was in aller Regel zu Zerstörung der gesteuerten Gleichrichter oder zum Zusammenbruch der Ausgangsspannung führt.

Die Aufgabe der vorliegenden Erfindung ist es, einen Synchron-Gleichrichter zu schaffen, der rückspeisungsfest ist und der in allen Betriebszuständen voll betriebstüchtig ist.

Die Lösung der gestellten Aufgabe ist wiedergegeben im kennzeichnenden Teil des Patentanspruchs 1 hinsichtlich der Hauptmerkmale der Erfindung, in den Patentansprüchen 2 und 3 hinsichtlich besonderer Ausführungsformen.

Mit Hilfe der beigefügten Zeichnungen wird die Erfindung anhand mehrerer Ausführungsbeispiele näher erläutert. Es zeigen:
- Fig. 1a: eine Schaltung nach dem Stande der Technik,
- Fig. 1b: eine Variante zum Stande der Technik,
- Fig. 2: ein erstes erfindungsgemässes Ausführungsbeispiel,
- Fig. 3: das Ausführungsbeispiel von Fig. 2 in mehr prinzipieller Darstellung als Ausschnitt aus Fig. 2,
- Fig. 4: ein erfindungsgemässes Detail von Fig. 2 und 3,
- Fig. 5: eine erste Variante zum Ausführungsbeispiel von Fig.3,
- Fig. 6: eine zweite Variante zum Ausführungsbeispiel von Fig. 3,
- Fig. 7: ein erfindungsgemässes Detail von Fig. 6.

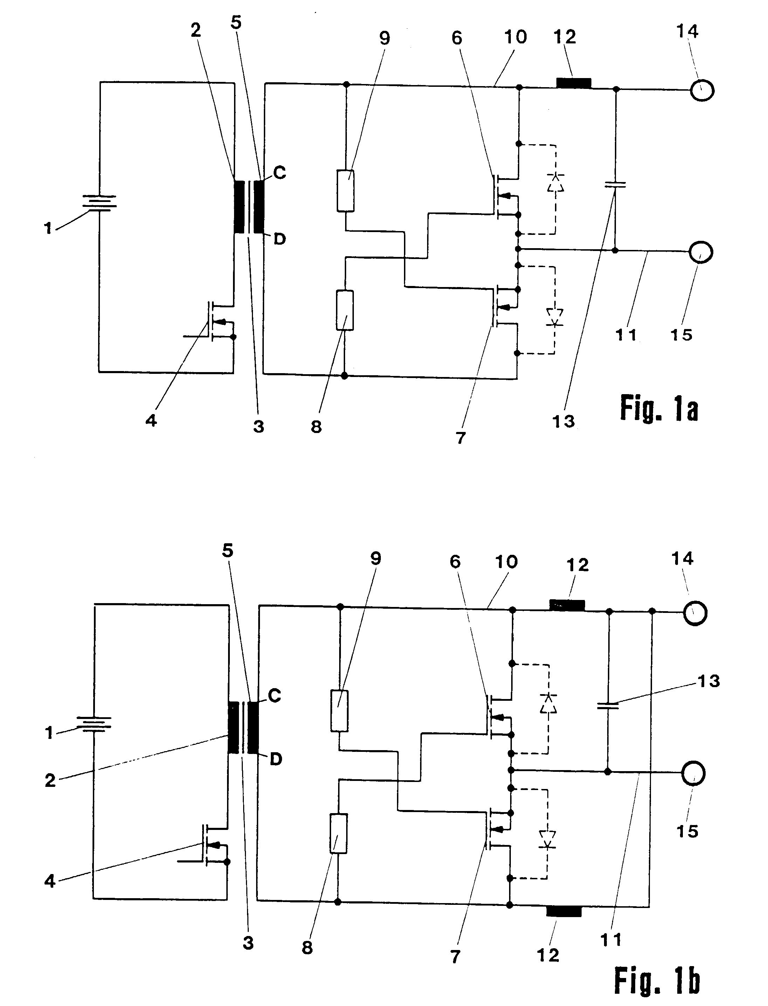

In Fig. 1a ist der Stand der Technik dargestellt, von welchem ausgegangen wird. Eine Gleichspannungs-Stromquelle 1 speist die mit 2 bezeichnete Primärwicklung eines Transformators 3. Der die Primärwicklung 2 speisende Strom wird periodisch unterbrochen durch einen elektronischen Schalter 4, wodurch in einer Sekundärwicklung 5 des Transformators 3 ein - annähernder - Rechteckpuls von Strom und Spannung entsteht. Zwei MOSFETs 6, 7, deren Gates über zwei Widerstände 8, 9 angesteuert werden, sind als gesteuerte Gleichrichter eingesetzt und speisen im Takt des Schalters 4 zwei Leitungen 10, 11. Leitung 11 ist direkt mit einem - negativen - Ausgang 15 verbunden, während zwischen einem weiteren - positiven - Ausgang 14 und der Drain-Elektrode des MOSFETs 6 eine Speicherdrossel 12 geschaltet ist. Der Widerstand 8 ist mit einem Ende C, der Widerstand 9 mit einem Ende D der Sekundärwicklung 5 verbunden. Das Ende C der Sekundärwicklung 5, der Anschluss des Widerstandes 8, die Drain-Elektrode des MOSFETs 6 und der eine Anschluss der Speicherdrossel 12 bilden einen Knoten, während das Ende D der Sekundärwicklung 5, der Anschluss des Widerstandes 8, die Drain-Elektrode des MOSFETs 7 einen weiteren Knoten bilden. Die Source-Elektroden der beiden MOSFETs 6, 7 sind auf die Leitung 11 geschaltet. Zwischen den Ausgängen 14, 15 befindet sich ein Kondensator 13 mit Glättungs- und Speicherfunktion.

Diese Schaltung bedingt eine zwischen den Ausgängen 14, 15 anliegende passive Last. Sind jedoch zwei oder mehrere solche nun beschriebene geschaltete Gleichrichter parallel geschaltet, so kann - beispielsweise bei kurzfristig ausfallender Schaltfunktion des Schalters 4 - Strom in die Schaltung zurückfliessen, was zu Kurzschluss über die nun leitenden MOSFETs 6, 7 und eventuell zu deren Zerstörung führt. Gestrichelt eingetragen sind ebenfalls die beiden sog. Substratdioden der MOSFETs 6, 7.

Fig. 1b zeigt eine Variante zum Stande der Technik nach dem US-Patent 5'434'768 von I. D. Jitaru. Für den Transformator 3 ist sowohl Durchfluss- als auch Sperrwandlerbetrieb möglich. Ferner ist in Fig. 1b gegenüber Fig. 1a eine zweite Speicherdrossel 12 vorhanden, was die Qualität der Ausgangsspannung über den Ausgängen 14, 15 verbessert.

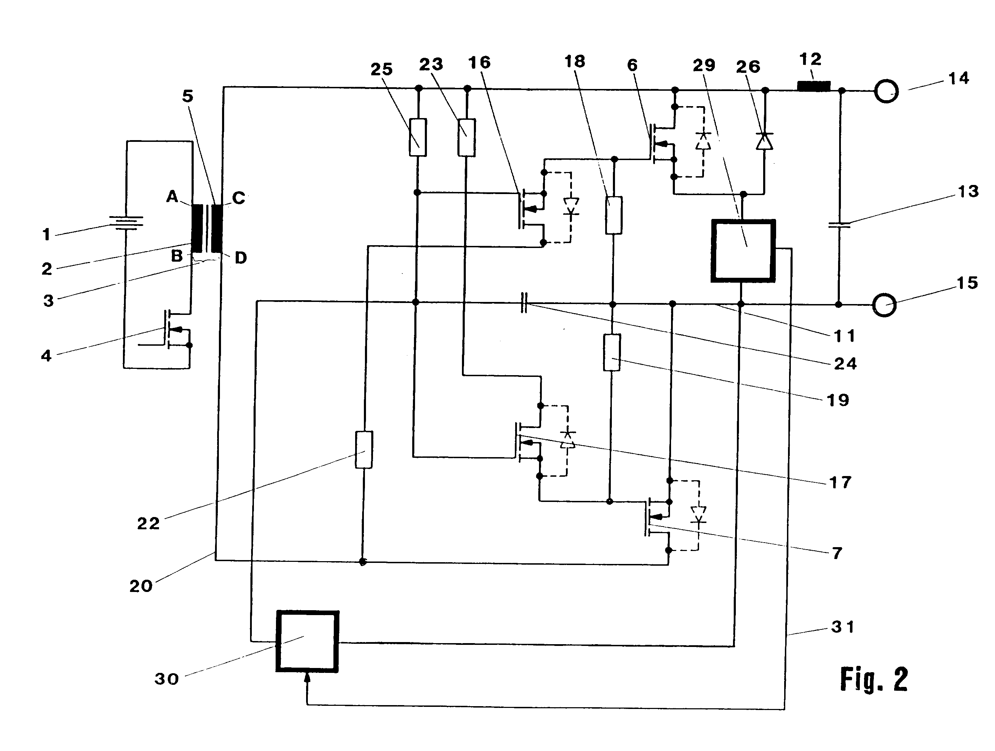

Fig. 2 zeigt das Prinzip der erfindungsgemässen Lösung. Wesentlich ist zunächst, dass die Gate-Elektroden der MOSFETs 6, 7 nicht mehr direkt über Widerstände angesteuert werden, sondern dass der Ladungszustand jeder Gate-Elektrode durch den über einen Widerstand abfliessenden Source-Drain-Strom eines MOSFETs erzeugt bzw. aufrechterhalten wird: Dem MOSFET 6 ist ein weiterer MOSFET 16 und ein Widerstand 18, dem MOSFET 7 ein weiterer MOSFET 17 und ein Widerstand 19 zugeordnet. Ist die Induktionsspannung U_{CD} über der Sekundärwicklung 5 positiv, so wird ein Kondensator 24 über einen Widerstand 25, welcher an das Ende C der Sekundärwicklung 5 angeschlossen ist, positiv aufgeladen gegenüber dem Potential der Leitung 11, an welche der Kondensator 24 anderseitig angeschlossen ist. Der Kondensator 24 ist verbunden mit den Gate-Elektroden der MOSFETs (16, 17), macht diese bei entsprechender Polarität von U_{CD} leitend. Dadurch werden die Gate-Elektroden der MOSFETs 6, 7 aufgeladen und diese - ebenfalls bei entsprechender Polarität von U_{CD} leitend und entweder als Gleichrichter-(MOSFET 7) oder als Freilaufdiode (MOSFET 6) arbeiten.

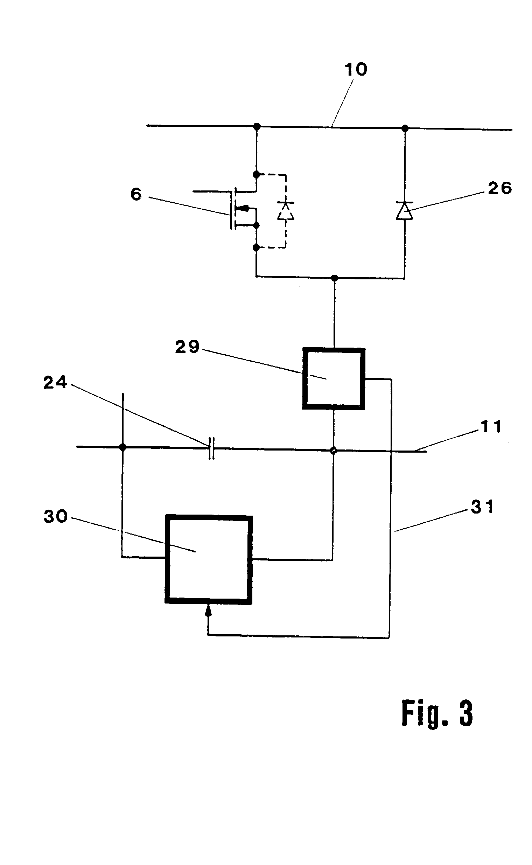

Ist die Spannung über dem Kondensator nicht ausreichend positiv oder die Spannung U_{CD} über die Sekundärwicklung 5 zu klein, so sperren die MOSFETs 6, 7. Es leiten dann nur die Substrat-Dioden der MOSFETs 6, 7: Die Anordnung wirkt wie ein normaler Diodengleichrichter. Zwar verschlechtert sich dabei der Wirkungsgrad, eine Rückspeisung bzw. ein Kurzschluss über die MOSFETs 6, 7 ist jedoch verhindert.Im Sinne einer Variante ist eine Schottky-Diode 26 parallel zu MOSFET 6 geschaltet. Diese Schottky-Diode 26 zeichnet sich aus durch geringere Vorwärtsspannung und besseres Schaltverhalten im Vergleich zur Substrat-Diode des MOSFETs 6. In der Betriebsart als Synchron-Gleichrichter kann daraus Nutzen gezogen werden, wenn der MOSFET 6 vorverschoben gesperrt wird; der Strom wechselt dann auf die Schottky-Diode 26. Der MOSFET 6 und die Schottky-Diode 26 sind über einen mit der Ziffer 29 bezeichneten Schaltblock mit der Leitung 11 verbunden. Für die Funktion des geschalteten Gleichrichters ist der Schaltblock 29 unerheblich und kann als sehr niederohmiger Widerstand betrachtet werden. Der Schaltblock 29 dient zur Strommessung. Um in den Diodengleichrichter-Betriebszustand zu wechseln, tritt eine - bisher unerwähnt gebliebene, als Block eingezeichnete - Logik 30 in Funktion: Sie schliesst die über den Widerstand 25 am Kondensator 24 aufgebaute Spannung kurz und gewährleistet einen klaren Wechsel von der Betriebsart mit geschalteten Gleichrichtern zur unempfindlichen Diodenbetriebsart. Die Logik 30 bezieht die Information für den Entscheidungsprozess über eine Leitung 31. Ausführungsbeispiele zur Logik 30 sind in den folgenden Figuren dargestellt. Die gleiche Schaltung - hinsichtlich des Schaltblocks 29 und der Logik 30 - ist in Fig. 3 in mehr prinzipieller Weise dargestellt. Weite Teile der Schaltung sind weggelassen. Der Schaltblock 29 misst den durch den MOSFET 6 und die dazu parallel geschaltete Schottky-Diode 26, gibt über die Leitung 31 eine dazu analoge Grösse an die Logik 30 weiter, welche beim Unterschreiten einer bestimmten Schwelle den Kondensator 24 entlädt und dadurch, über die MOSFETs 16, 17 die MOSFETs 6, 7 sperrt.

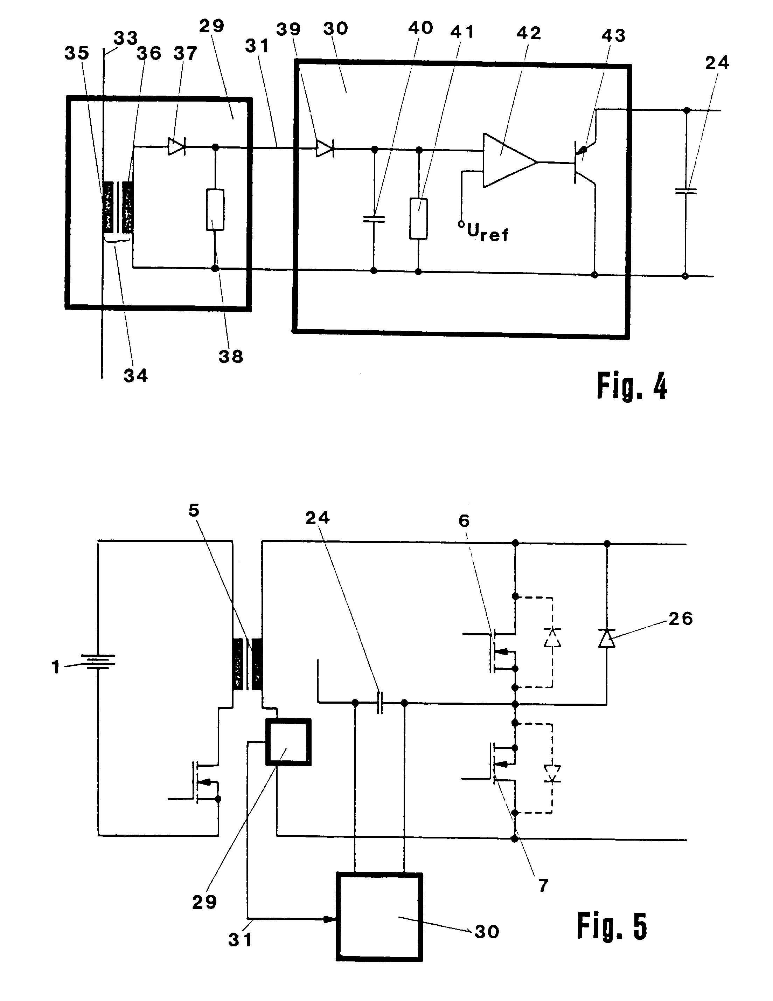

Fig. 4 zeigt ein Ausführungsbeispiel für den Schaltblock 29 und die Logik 30 und deren Verknüpfung. In einer mit 33 bezeichneten Leitung fliesst der zu messende Strom I_{b} zum MOSFET 6 und zur Schottky-Diode 26. In die Leitung 33 eingeschaltet ist ein Mess-Transformator 34 mit einer Primärwicklung 35, welche nur eine oder wenige Windungen aufweist, während eine Sekundärwicklung 36 viele Windungen aufweist, deren Spannung über eine Diode 37 an einem niederohmigen Bürdenwiderstand 38 abfällt. Dieser Spannungsabfall ist dem pulsierenden Strom I_{b} proportional. Die Diode 37 sperrt bei Vorzeichenumkehr des Stromes I_{b} und der über der Sekundärwicklung 36 induzierten Spannung und ermöglicht so die Rückmagnetisierung des Transformators 34. Die Spannung über dem Widerstande 38 wird durch die bereits genannte Leitung 31 an die Logik 30 übergeben; sie lädt über eine weitere Diode 39 einen Kondensator 40 auf ihren Spitzenwert auf. Der Kondensator 40 wird von einem hochohmigen Widerstand 41 langsam entladen. Ein nachgeschalteter Verstärker 42 vergleicht die Spannung am Kondensator 40 mit einer festen Referenzspannung U_{ref}. Unterschreitet der Spitzenwert des Stromes I_{b} eine vorgegebene Schwelle, so wird ein dem Verstärker 42 nachgeschalteter Transistor 43 leitend und schliesst den Kondensator 24 kurz.

Die Strommess-Schaltung in der Logik 30 ist an sich bekannt und stellt eines der bekannten Strommess-Verfahren dar.

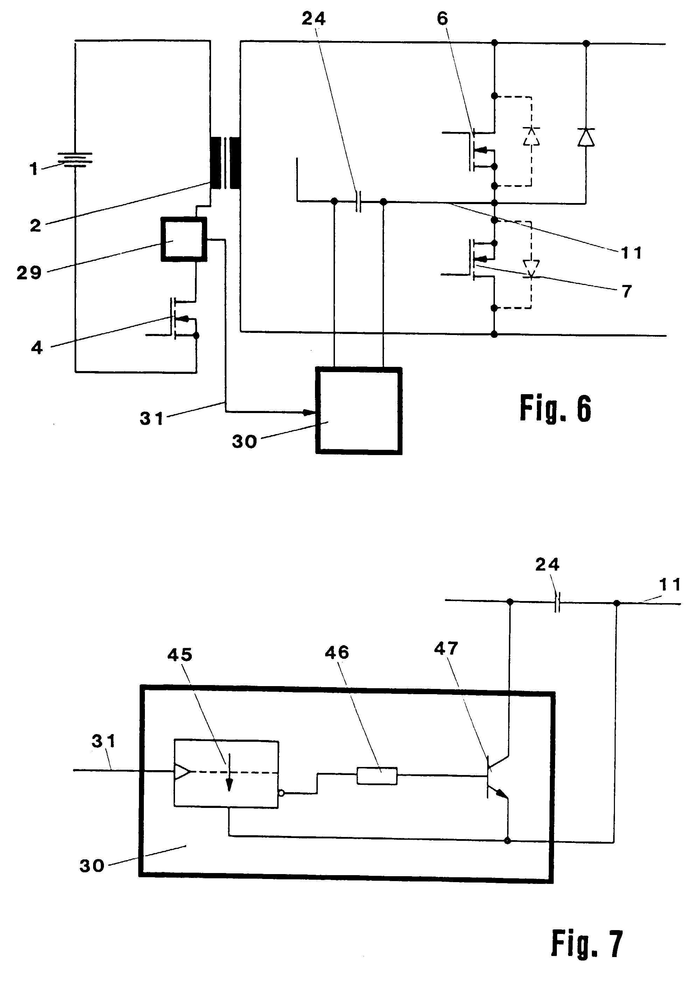

Die Fig. 5 und 6 zeigen Varianten zur Fig. 3 hinsichtlich der Stelle, an welcher der Strom gemessen wird, der zur Auswertung durch die Logik 30 verwendet wird. Wiederum sind nur Teile aus Fig. 2 wiedergegeben: In Fig. 5 wird der Strom in Serie mit der Sekundärwicklung 5 des Transformators 3 und mit der Source-Drain-Strecke des MOSFET 7 gemessen. Dies nur im Sinne eines Beispiels, da die Strommessung grundsätzlich an jeder Stelle im Stromkreis der Sekundärwicklung 5 angeordnet werden kann, also analog zu Fig. 3 und 4. In Fig. 6 ist die Strommessung mit dem Schaltblock 29 im Primärkreis des Transformators 3 dargestellt. Die in Fig. 4 dargestellte Schaltung für die Strommessung ist nur als Beispiel zu verstehen. Selbstverständlich sind andere Messmethoden, wie z.B. der direkte Spannungsabfall über einen - niederohmigen - Widerstand oder die Verwendung eines Hall-Wandlers gleichermassen im Sinne der Erfindung.

In Fig. 7 ist eine weitere erfindungsgemässe Schaltung für die Logik 30 dargestellt. Die Leitung 31 wird hier gespeist von jenem Puls-Signal, welches auch den Schalter 4 öffnet und schliesst. Dieses Puls-Signal wird als Steuersignal für einen wiederansteuerbaren monostabilen Multivibrator 45 benutzt, dessen Einschaltdauer etwa der Periodendauer der Schaltfrequenz entspricht. Solange die Steuerimpulse in der vorgesehenen Frequenz folgen, bleibt der Multivibrator 45 eingeschaltet, und ein über einen Widerstand 46 nachgeschalteter Transistor 47 bleibt gesperrt. Unterbleiben die Steuerimpulse, etwa weil der Steueroszillator nicht mehr taktet oder weil die Arbeitsfrequenz infolge Kurzschlusses an der Last absinkt, dann fällt der Multivibrator 45 in seine Ruhelage zurück, der Transistor 47 wird leitend und schliesst den Kondensator 24 kurz, womit der geschaltete Gleichrichter in den reinen Diodenbetrieb übergeht, damit also erfindungsgemäss gegen Rückspeisung unempfindlich wird. Anstelle der MOSFETs 16, 17 können in den beschriebenen Ausführungsbeispielen grundsätzlich auch Bipolar-Transistoren mit dazu antiparallel geschalteten Dioden verwendet werden.

## Patentansprüche

1. Synchrongleichrichter, bestehend aus einem Transformator (3) mit einer Primärwicklung (2), welche über einen von einem Oszillator gesteuerten Schalter (4) aus einer Gleichspannungsquelle (1) alternierend mit Strom versorgt wird, welcher Transformator (3) eine erste Sekundärwicklung (5) mit Enden (C, D) aufweist, ferner bestehend aus einem ersten MOSFET (6) und einem zweiten MOSFET (7), welche alternierend im Takte des Oszillators eingeschaltet werden, wobei der eine MOSFET (7) die Funktion einer Gleichrichterdiode, der zweite MOSFET (6) diejenige einer Freilaufdiode erfüllt, die Drain-Elektrode des ersten MOSFETs (6) einerseits mit dem einen Ende (C) der ersten Sekundärwicklung (5), anderseits über eine Speicherdrossel (12) mit einem Ausgang (14) der Vorrichtung verbunden ist, die Drain-Elektrode des zweiten MOSFETs (7) das andere Ende (D) der ersten Sekundärwicklung (5) speist, die Source-Elektroden beider MOSFETs (6, 7) mit einer Leitung (11) und über diese mit dem anderen Ausgang (15) der Vorrichtung verbunden sind, und die beiden Ausgänge (14, 15) der Vorrichtung durch einen Speicher- und Glättungskondensator (13) verbunden sind, dadurch gekennzeichnet, dass
- eine Schottky-Diode (26) vorhanden ist, welche parallel zum ersten MOSFET (6) geschaltet ist, dergestalt, dass sie die gleiche Leitungsrichtung aufweist, wie die Substratdiode des genannten MOSFET (6),
- ein erster weiterer MOSFET (16) vorhanden ist, dessen Source-Elektrode einerseits mit der Gate-Elektrode des MOSFETs (6) anderseits über einen ersten Widerstand mit der Leitung (11) verbunden ist,
- ein zweiter weiterer MOSFET (17) vorhanden ist, dessen Source-Elektrode einerseits mit der Gate-Elektrode des MOSFETs (7) anderseits über einen zweiten Widerstand (19) mit der Leitung (11 verbunden ist,
- die Drain-Elektrode des ersten weiteren MOSFETs (16) über einen dritten Widerstand (22) mit dem einen Ende (D) der Sekundärwicklung (5) und der Drain-Elektrode des zweiten MOSFETs (17), und die Source-Elektrode des zweiten weiteren (MOSFETs (17) über einen vierten Widerstand (23) mit dem anderen Ende (C) der Sekundärwicklung (15) verbunden ist,
- ein fünfter Widerstand (25) vorhanden ist, der das andere Ende (C) der Sekundärwicklung (5) sowohl mit den Gate-Elektroden der beiden weiteren MOSFETs (16, 17), als auch mit dem einen Ende eines weiteren Kondensators (24) verbindet, wobei das andere Ende des weiteren Kondensators (24) an die Leitung (11) angeschlossen ist,
- eine Logik (30) vorhanden ist, deren Ausgänge parallel zum weiteren Kondensator (24) geschaltet sind und deren Eingangssignal über eine weitere Leitung (31) erfolgt, und die Logik (30) Mittel enthält, um den weiteren Kondensator (24) kurzzuschliessen und zu entladen, falls die Induktionsspannung U_{CD} über der Sekundärwicklung (5) über mehr als eine Taktperiode des Schalters (4) ausfällt,
- ein Schaltblock (29) vorhanden ist, welcher die Mittel enthält, um den von der Sekundärwicklung (5) erzeugten Strom zu messen.

2. Synchrongleichrichter nach Patentanspruch 1, dadurch gekennzeichnet, dass
- die weitere Leitung (31) als Eingangssignal für die Logik (30) das den Schalter (4) ansteuernde Pulssignal führt,
- die Logik (39) einen wiederansteuerbaren monostabilen Multivibrator (45) enthält, welcher von der weiteren Leitung (31) gespeist wird, wobei die Haltezeit des Multivibrators (45) länger ist, als eine Taktperiode des Schalters (4),
- am Ausgang des Multivibrators (45) beim Ausfall des Eingangssignales ein Ausgangssignal erscheint,
- der Ausgang des Multivibrators (45) über einen Widerstand (46) mit der Basis eines Transistors (47) verbunden ist, dessen Emitter-Kollektor-Strecke parallel geschaltet ist mit dem weiteren Kondensator (24).

3. Synchrongleichrichter nach Patentanspruch 1, dadurch gekennzeichnet, dass
- die Logik (30) eine Diode (39) enthält, welche von der weiteren Leitung (31) gespeist wird und einen Kondensator (40) auflädt, welcher parallel geschaltet ist zu einem hochohmigen Widerstande (41),
- ein Verstärker (42) vorhanden ist, dessen einer Eingang die Spannung an der genannten Parallelschaltung von Kondensator (40) und hochohmigem Widerstande (41) ist, dessen anderer Eingang an einer Referenzspannung liegt,
- ein Transistor (43) vorhanden ist, dessen Basis mit dem Ausgang des Verstärkers (42) verbunden ist, und dessen Emitter-Kollektor-Strecke parallel geschaltet ist mit dem weiteren Kondensator (24).

4. Synchrongleichrichter nach Patentanspruch 3, dadurch gekennzeichnet, dass die Mittel, um den von der Sekundärwicklung (5) erzeugten Strom zu messen bestehen aus
- einem Transformator (34) mit einer Primärwicklung (35) mit wenigen Windungen und einer Sekundärwicklung (36) mit vielen Windungen,
- aus einer Diode (37) und einem niederohmigen Widerstand (38), welche in Serie zueinander und zur Sekundärwicklung (36) geschaltet sind,
- aus der weiteren Leitung (31), welche zwischen der Diode (37) und dem Widerstande (38) angeschlossen ist.

5. Synchrongleichrichter nach Patentanspruch 3, dadurch gekennzeichnet, dass der Schaltblock (29) zwischen der Leitung (11) und der Parallelschaltung aus dem ersten MOSFET (6) und der Schottky-Diode (26) eingeschaltet ist.

6. Synchrongleichrichter nach Patentanspruch 3, dadurch gekennzeichnet, dass der Schaltblock (29) in Serie geschaltet ist mit dem Ende (D) der Sekundärwicklung (5).

7. Synchrongleichrichter nach Patentanspruch 3, dadurch gekennzeichnet, dass der Schaltblock (29) in Serie geschaltet ist mit der Primärwicklung (2) des Transformators (3).

8. Synchrongleichrichter nach Patentanspruch 1, dadurch gekennzeichnet, dass anstelle der zwei weiteren MOSFETs (16, 17) Bipolar-Transistoren und dazu antiparallel geschaltete Dioden vorhanden sind.

## Claims

1. A synchronous rectifier, comprising a transformer (3) with a primary winding (2) which is supplied in an alternating manner with current from a direct current source (1) via a switch (4) which is controlled by an oscillator, which transformer (3) has a first secondary winding (5) with ends (C, D), additionally comprising a first MOSFET (6) and a second MOSFET (7), which are connected in an alternating manner in the cycle of the oscillator, in which the one MOSFET (7) fulfills the function of a rectifier diode, the second MOSFET (6) that of a free-running diode, the drain electrode of the first MOSFET (6) on the one hand is connected to the one end (C) of the first secondary winding (5), on the other hand via a storage impedance (12) to an output (14) of the device, the drain electrode of the second MOSFET (7) supplies the other end (D) of the first secondary winding (5), the source electrodes of both MOSFETs (6, 7) are connected to a line (11) and via this with the other output (15) of the device, and the two outputs (14, 15) of the device are connected by a storage- and smoothing condenser (13), characterised in that
- a Schottky diode (26) is present, which is connected in parallel to the first MOSFET (6) such that it has the same conducting direction as the substrate diode of the said MOSFET (6),
- a first further MOSFET (16) is present, the source electrode of which is connected on the one hand to the gate electrode of the MOSFET (6) and on the other hand via a first resistance to the line (11),
- a second further MOSFET (17) is present, the source electrode of which is connected on the one hand to the gate electrode of the MOSFET (7) and on the other hand via a second resistance (19) to the line (11),
- the drain electrode of the first further MOSFET (16) is connected via a third resistance (22) to the one end (D) of the secondary winding (5) and the drain electrode of the second MOSFET (17), and the source electrode of the second further MOSFET (17) is connected via a fourth resistance (23) to the other end (C) of the secondary winding (15),
- a fifth resistance (25) is present, which connects the other end (C) of the secondary winding (5) both to the gate electrodes of the two further MOSFETs (16, 17) and also to the one end of a further condenser (24), in which the other end of the further condenser (24) is connected to the line (11),
- a logic (30) is present, the outputs of which are connected parallel to the further condenser (24) and the input signal of which takes place via a further line (31), and the logic (30) contains means in order to short-circuit and discharge the further condenser (24) if the induction voltage U_{CD} via the secondary winding (5) fails over more than one cycle period of the switch (4),
- a switching block (29) is present, which contains the means in order to measure the current produced by the secondary winding (5).

2. A synchronous rectifier according to Claim 1, characterised in that
- the further line (31) as input signal for the logic (30) carries the pulse signal controlling the switch (4),
- the logic (39) contains a recontrollable monostable multivibrator (45) which is supplied by the further line (31), in which the holding time of the multivibrator (45) is longer than a cycle period of the switch (4),
- at the output of the multivibrator (45), on failure of the input signal an output signal appears,
- the output of the multivibrator (45) is connected via a resistance (46) to the base of a transistor (47), the emitter-collector section of which is connected in parallel with the further condenser (24).

3. A synchronous rectifier according to Claim 1, characterised in that
- the logic (30) contains a diode (39) which is supplied from the further line (31) and charges a condenser (40), which is connected in parallel with a high-ohmic resistance (41),
- an amplifier (42) is present, one input of which is the voltage at the said parallel connection of condenser (40) and high-ohmic resistance (41), and the other input of which lies at a reference voltage,
- a transistor (43) is present, the base of which is connected with the output of the amplifier (42), and the emitter-collector section of which is connected in parallel with the further condenser (24).

4. A synchronous rectifier according to Claim 3, characterised in that the means in order to measure the current produced by the secondary winding (5) comprise
- a transformer (34) with a primary winding (35) with few coils and a secondary winding (36) with several coils,
- a diode (37) and a low-ohmic resistance (38) which are connected in series to each other and to the secondary winding (36),
- the further line (31) which is connected between the diode (37) and the resistance (38).

5. A synchronous rectifier according to Claim 3, characterised in that the switching block (29) is connected between the line (11) and the parallel connection of the first MOSFET (6) and the Schottky diode (26).

6. A synchronous rectifier according to Claim 3, characterised in that the switching block (29) is connected in series with the end (D) of the secondary winding (5).

7. A synchronous rectifier according to Claim 3, characterised in that the switching block (29) is connected in series with the primary winding (2) of the transformer (3).

8. A synchronous rectifier according to Claim 1, characterised in that instead of the two further MOSFETs (16, 17) bipolar transistors and diodes connected antiparallel thereto are present.

## Revendications

1. Redresseur de courant synchrone formé d'un transformateur (3) comportant un enroulement primaire (2) qui est alimenté en courant en alternance à partir d'une source de tension continue (1), par l'intermédiaire d'un interrupteur (4) commandé par un oscillateur, et un premier enroulement secondaire (5) présentant des extrémités (C, D), d'un premier transistor MOSFET (6) et d'un second transistor MOSFET (7) qui sont mis en circuit en alternance au rythme de l'oscillateur, étant précisé qu'un transistor MOSFET (7) remplit la fonction d'une diode de redressement et l'autre transistor MOSFET (6) celle d'une diode de roue libre, que l'électrode de drain du premier transistor MOSFET (6) est reliée d'un côté à une extrémité (C) du premier enroulement secondaire (5) et de l'autre côté, par l'intermédiaire d'une bobine de choc accumulatrice (12), à une sortie (14) du dispositif, que l'électrode de drain du second transistor MOSFET (7) alimente l'autre extrémité (D) du premier enroulement secondaire (5), que les électrodes de source des deux transistors MOSFET (6, 7) sont reliées à une ligne (11) et, par l'intermédiaire de celle-ci, à l'autre sortie (15) du dispositif, et enfin que les deux sorties (14, 15) du dispositif sont reliées par un condensateur d'accumulation et de lissage (13), caractérisé
- en ce qu'il est prévu une diode à barrière de Schottky (26) qui est montée parallèlement au premier transistor MOSFET (6), de telle sorte qu'elle présente le même sens de ligne que la diode de substrat du transistor MOSFET (6),
- en ce qu'il est prévu un premier transistor MOSFET supplémentaire (16) dont l'électrode de source est reliée d'une part à l'électrode de grille du transistor MOSFET (6) et d'autre part à la ligne (11), par l'intermédiaire d'une première résistance,
- en ce qu'il est prévu un second transistor MOSFET (17) dont l'électrode de source est reliée d'une part à l'électrode de grille du transistor MOSFET (7) et d'autre part à la ligne (11), par l'intermédiaire d'une deuxième résistance (19),
- en ce que l'électrode de drain du premier transistor MOSFET supplémentaire (16) est reliée par l'intermédiaire d'une troisième résistance (22) à une extrémité (D) de l'enroulement secondaire (5) et à l'électrode de drain du second transistor MOSFET (17), tandis que l'électrode de source du second transistor MOSFET supplémentaire (17) est reliée par l'intermédiaire d'une quatrième résistance (23) à l'autre extrémité (C) de l'enroulement secondaire (5),
- en ce qu'il est prévu une cinquième résistance (25) qui relie l'autre extrémité (C) de l'enroulement secondaire (5) non seulement aux électrodes de grille des deux transistors MOSFET supplémentaires (16, 17), mais aussi à une extrémité d'un condensateur supplémentaire (24), l'autre extrémité de celui-ci étant raccordée à la ligne (11),
- en ce qu'il est prévu un système logique (30) dont les sorties sont montées parallèlement au condensateur supplémentaire (24) et dont le signal d'entrée arrive par une ligne supplémentaire (31), et le système logique (30) contient des moyens pour court-circuiter et décharger le condensateur supplémentaire (24) au cas où la tension d'induction U_{CD} au niveau de l'enroulement secondaire (5) fait défaut pendant plus d'une période d'horloge de l'interrupteur (4), et
- en ce qu'il est prévu un bloc de commutation (29) qui contient les moyens pour mesurer le courant généré par l'enroulement secondaire (5).

2. Redresseur de courant synchrone selon la revendication 1, caractérisé
- en ce que la ligne supplémentaire (31) transmet comme signal d'entrée pour le système logique (30) le signal d'impulsion qui commande l'interrupteur (4),
- en ce que le système logique (30) contient un multivibrateur monostable apte à être réamorcé (45) qui est alimenté par la ligne supplémentaire (31), le temps d'arrêt du multivibrateur (45) étant plus long qu'une période d'horloge de l'interrupteur (4),
- en ce qu'en l'absence du signal d'entrée, un signal de sortie apparaît à la sortie du multivibrateur (45) et
- en ce que la sortie du multivibrateur (45) est reliée par l'intermédiaire d'une résistance (46) à la base d'un transistor (47) dont la section émetteur-collecteur est montée parallèlement au condensateur supplémentaire (24).

3. Redresseur de courant synchrone selon la revendication 1, caractérisé
- en ce que le système logique (30) contient une diode (39) qui est alimentée par la ligne supplémentaire (31) et qui charge un condensateur (40) monté parallèlement à une résistance à forte impédance (41),
- en ce qu'il est prévu un amplificateur (42) dont une entrée est soumise à la tension appliquée au montage parallèle mentionné du condensateur (40) et de la résistance à forte impédance (41), et dont l'autre entrée est soumise à une tension de référence, et
- en ce qu'il est prévu un transistor (43) dont la base est reliée à la sortie de l'amplificateur (42) et dont la section émetteur-collecteur est montée parallèlement au condensateur supplémentaire (24).

4. Redresseur de courant synchrone selon la revendication 3, caractérisé en ce que les moyens pour mesurer le courant généré par l'enroulement secondaire (5) comprennent :
- un transformateur (34) formé d'un enroulement primaire (35) qui présente un petit nombre de spires et d'un enroulement secondaire (36) qui présente un grand nombre de spires,
- une diode (37) et une résistance à faible impédance (38) qui sont montées en série l'une par rapport à l'autre et par rapport à l'enroulement secondaire (36), et
- la ligne supplémentaire (31), qui est raccordée entre la diode (37) et la résistance (38).

5. Redresseur de courant synchrone selon la revendication 3, caractérisé en ce que le bloc de commutation (29) est monté entre la ligne (11) et le montage parallèle formé du premier transistor MOSFET (6) et de la diode à barrière de Schottky (26).

6. Redresseur de courant synchrone selon la revendication 3, caractérisé en ce que le bloc de commutation (29) est monté en série avec l'extrémité (D) de l'enroulement secondaire (5).

7. Redresseur de courant synchrone selon la revendication 3, caractérisé en ce que le bloc de commutation (29) est monté en série avec l'enroulement primaire (2) du transformateur (3).

8. Redresseur de courant synchrone selon la revendication 1, caractérisé en ce qu'il est prévu, à la place des deux transistors MOSFET supplémentaires (16, 17), des transistors bipolaires et des diodes disposées suivant un montage antiparallèle par rapport à ceux-ci.
